# EUROPÄISCHE PATENTSCHRIFT

(11) **EP 1 524 210 B1**
(45) Veröffentlichungstag und Bekanntmachung des Hinweises auf die Patenterteilung: **08.03.2006**
(21) Anmeldenummer: 04024232.3
(22) Anmeldetag: 12.10.2004
(51) Int. Cl.: B65G 13/11

(54) **Förderer mit profilierten Seitenwangen**
Conveyor having profiled side frames
Convoyeur avec parois laterales profilées

(30) Priorität: 16.10.2003 DE 10348091
(43) Veröffentlichungstag der Anmeldung: 20.04.2005
(73) Patentinhaber: Kolbus GmbH & Co. KG, 32369 Rahden (DE)
(72) Erfinder: Gerke, Klaus, 27211 Bassum (DE)

(56) Entgegenhaltungen:
- DE-A1- 2 934 365
- DE-A1- 19 946 452
- DE-U1- 8 713 958
- US-A- 5 372 247
- US-A1- 2001 008 201

## Beschreibung

Die vorliegende Erfindung betrifft einen Förderer mit profilierten Seitenwangen, bestehend aus einem aus Leichtmetall bestehenden Profilkörper mit longitudinalen, teilweise von der Seitenfläche des Profilkörpers zugänglichen und teilweise als Nutensteinkanal ausgebildeten Hohlräumen und aus einer Abdeckung zum Verschließen eines in der Seitenwange ausgebildeten Kabelkanals.

Derartige Förderer sind allgemein bekannt und finden zahlreiche Verwendung in verschiedensten Industrien. Beispielsweise werden sie in der Druckweiterverarbeitung eingesetzt zur Förderung und Verteilung von Büchern und Broschuren, z.B. von einer Bearbeitungsmaschine zur anderen. Je nach Art der zu befördernden Gegenstände und unter Berücksichtigung der Bewegungsanforderungen bzw. -bedingungen sind die Förderer als Gurtförderer (Förderband, Transportband), Riemenförderer, Kettenförderer, Rollenförderer (Rollenbahn) oder Scharnierbandförderer ausgebildet. Weit verbreitet sind Förderer mit profilierten Seitenwangen gebildet aus stranggepressten, aus einem Leichtmetall bestehenden Profilkörpern (siehe z.B. das Dokument US-A-5372247). Sie weisen bekannte, als T-Nuten ausgestaltete Befestigungsnuten auf, die zum Anbringen der Antriebselemente, Ständersysteme, Seitenführungen, Schutzhauben oder Halterungen für Zusatzeinrichtungen wie Vereinzelungssperren, Lichtschranken usw. dienen, wodurch individuell angepasste Lösungen kostengünstig aus einem auf den verwendeten Profilkörper abgestimmten Baukastensystem realisierbar sind.

In der DE 36 23 202 C1 ist beispielsweise eine solche profilierte Seitenwange beschrieben. Der verwendete Profilkörper ist U- bzw. C-förmig ausgebildet, wobei die beiden Schenkel in Gebrauchslage von der Förderstrecke wegweisen. Mit dem Einstecken von in dem Profilkörper längsverlaufenden Abdeckblechen wird ein geschlossener Kabelkanal zwischen den beiden. Schenkeln geschaffen zur Unterbringung von Anschlusskabeln, Pneumatikleitungen usw. Die Zu- und Abführung der Kabel und Leitungen erfolgt über in den Schenkeln des Profilkörpers vorzusehenden Öffnungen.

Aus der DE 87 13 958 U1 ist eine Seitenwange für Förderer bekannt, die zur Aufnahme von Elektrokabeln, Rohrleitungen u. dgl. einen in Längsrichtung verlaufenden, U-förmig profilierten Kabelkanal umfasst. Dieser ist mit Rastnasen an den Schenkeln versehen, die in entsprechende auf den Innenseiten der oberen und unteren Schenkel des C-förmigen Profilkörpers ausgebildete Nuten eingreifen, wobei die untere Nut derart ausgebildet ist, dass der Kabelkanal zum Öffnen um die entsprechend ausgebildete untere Rastnase bis zu einem Anschlag kippbar gelagert ist.

Für das Zu- und Abführen der Kabel und Leitungen ist es bei den bekannten Konstruktionen erforderlich, Durchbrüche durch mechanische Bearbeitungen wie Bohren in den Profilkörper oder die Abdeckungen einzubringen. Besonders nachteilig ist, dass sich notwendige Öffnungen erst am Einsatzort ergeben, wodurch ein nicht unerheblicher Montageaufwand eingeplant werden muss. Auch werden hierdurch später erforderliche Installationsveränderungen erheblich erschwert.

Der vorliegenden Erfindung liegt nun die Aufgabe zugrunde, einen Förderer mit einer profilierten Seitenwange gemäß dem Oberbegriff des Anspruchs 1 vorzuschlagen, bei dem Kabel und Leitungen aus dem geschlossenen Kabelkanal zu- und abführbar sind, ohne dass hierfür Öffnungen durch mechanische Bearbeitungen am Profilkörper oder den Abdeckungen geschaffen werden müssen.

Diese Aufgabe wird erfindungsgemäß durch die Merkmale des kennzeichnenden Teils des Anspruchs 1 gelöst. Die abhängigen Ansprüche definieren bevorzugte Weiterausgestaltungen. Die Erfindungsidee liegt darin, das C-förmige Grundprofil der Seitenwange aufzutrennen in einen im Wesentlichen L-förmig stranggepressten Profilkörper und einen daran befestigten durch Laserbearbeitung geschaffenen Blechkörper, welcher in Gebrauchslage als unterer Schenkel fungiert und in Längsrichtung voneinander beabstandete Aussparungen aufweist, durch die die Kabel und Leitungen zu- und abführbar sind. Bevorzugt sind die Aussparungen durch Perforationen vordefiniert und somit bis zum Herausbrechen derselben verschlossen. Durch entsprechend enge Teilungsabstände der Aussparungen wird jederzeit ein Zu- und Abführen der Kabel und Leitungen an nahezu beliebiger Stelle entlang des Förderers ermöglicht, sodass eine mechanische Bearbeitung des Profilkörpers oder der Abdeckung zur Schaffung von Durchbrüchen entfällt.

Vorteilhaft ist die Verwendung eines Blechkörpers, welcher als Blechprofil mit einem C-förmigen Grundquerschnitt umgeformt ist und der mit seinem Steg an der Innenseite des Profilkörpers befestigt ist. Sein unterer Schenkel bildet den besagten unteren Schenkel des C-förmigen Grundprofils, während sein oberer Schenkel den Kabelkanal in zwei voneinander getrennte Bereiche aufteilt, sodass z.B. Stromversorgungsleitungen und Steuerleitungen getrennt voneinander verlegbar sind. Zweckmäßig ist, dass der obere Schenkel in Längsrichtung mit voneinander beabstandeten Aussparungen versehen ist, sodass die Leitungen und Kabel aus dem oberen Kabelkanal durch den unteren Kabelkanal hindurch zu- und abführbar sind.

Das Einlegen der Leitungen und Kabel wird durch die sich bis zur Aussenkante der Schenkel erstreckenden Aussparungen wesentlich erleichtert. Der bzw. die Schenkel des Blechkörpers stellen gewissermaßen den jeweiligen Kanalboden dar, der durch das Basisteil einerseits und durch die Abdeckung andererseits seitlich begrenzt ist. Bei abgenommener Abdeckung ist eine seitliche Kanalbegrenzung durch an den Enden der Schenkel vorgesehene Abkantungen gegeben, welche gleichzeitig Anlageflächen für die Abdeckung darbieten. Eine besonders einfache und zugleich steife Anbringung der Abdeckung ist gemäß Anspruch 8 dadurch gegeben, dass die Abdeckung als einfache Blechtafel oder Kunststoffplatte mit ihrem unteren Randbereich hinter der Abkantung des unteren Schenkels des Blechkörpers und mit ihrem oberen Randbereich hinter einer am oberen Schenkel des Profilkörpers ausgebildeten Nase anliegt und dass sie durch den oberen Schenkel des Blechkörpers in eine nach außen gekrümmte Kontur gezwungen wird.

Neben den anderen Weiterausgestaltungen ist die besonders vorteilhafte Ausbildung des Blechkörpers gemäß Anspruch 11 zu erläutern, der die beiden Seitenwangen zum Bandkörper miteinander verbindet. Er weist in den Randbereichen zu den Seitenwangen Öffnungen auf, durch die die Anschlussleitungen für auf der Oberseite des Förderers angeordnete Zusatzeinrichtungen führbar sind, zur sicheren Verlegung der Leitungen auf der Innenseite der Seitenwangen. Insgesamt ist festzuhalten, dass durch die Erfindung ästhetische Gestaltungen für Förderer ermöglicht werden, weil keine sichtbaren Leitungen und Kabel das geschaffene Erscheinungsbild stören.

Die Erfindung wird unter Bezugnahme auf die Zeichnung anhand eines Ausführungsbeispiels näher erläutert.
- **Fig. 1**: zeigt in perspektivischer Darstellung einen Gurtförderer mit teilweise ausgeblendeter Abdeckung des Kabelkanals.
- **Fig. 2**: zeigt eine Schnittansicht einer linken Seitenwange des Förderers gemäß Schnittverlauf II - II in Fig. 1.

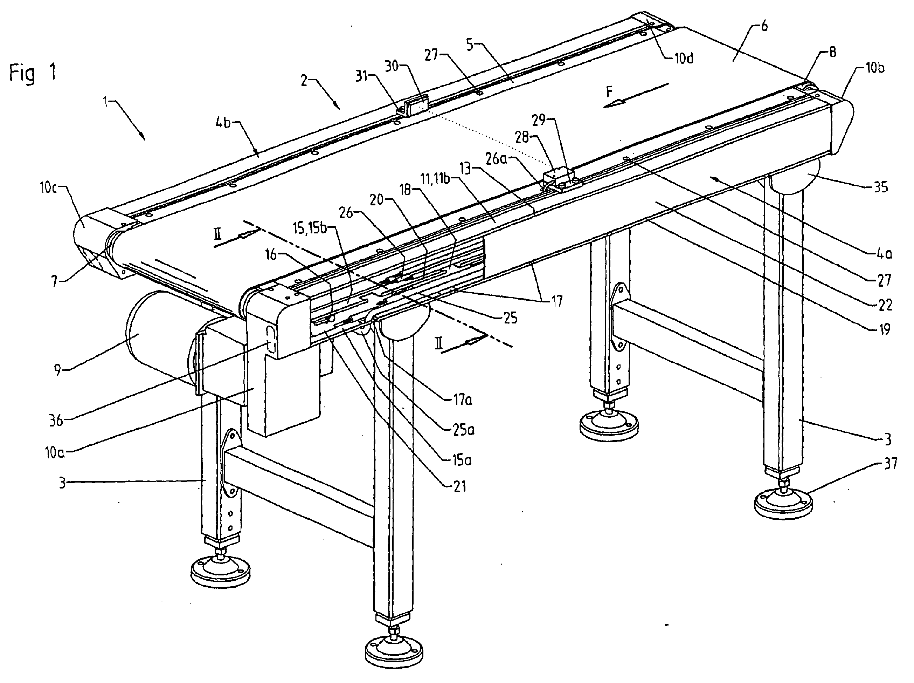

Aus der Fig. 1 ist der generelle Aufbau eines gesamthaft mit 1 bezeichneten Gurtförderers ersichtlich, dessen Basis von einem Bandkörper 2 gebildet ist, bestehend aus linken und rechten Seitenwangen 4a, 4b verbunden durch einen U-förmigen Blechkörper 5, der mit seinem Steg 5a eine Lauffläche für den Tragtrum eines in Förderrichtung F umlaufenden Gurtes 6 darbietet. Diesem Bandkörper 2 sind über Bandkörperbefestigungen 35 Ständer 3 zugeordnet, die sich mit Gelenkfüßen 37 gegen den Fußboden abstützen. An den Stimseiten des Bandkörpers 2 sind eine Antriebswalze 7 und eine Umlenkwalze 8 für den Gurt in nicht näher dargestellten Anbauteilen gelagert. Die Antriebswalze 7 wird von einem Getriebemotor 9 über bekannte Antriebsmittel angetrieben. Die jeweiligen Lagerstellen und Antriebe der beiden Walzen 7, 8 sind durch Schutzhauben 10a ...10d abgedeckt.

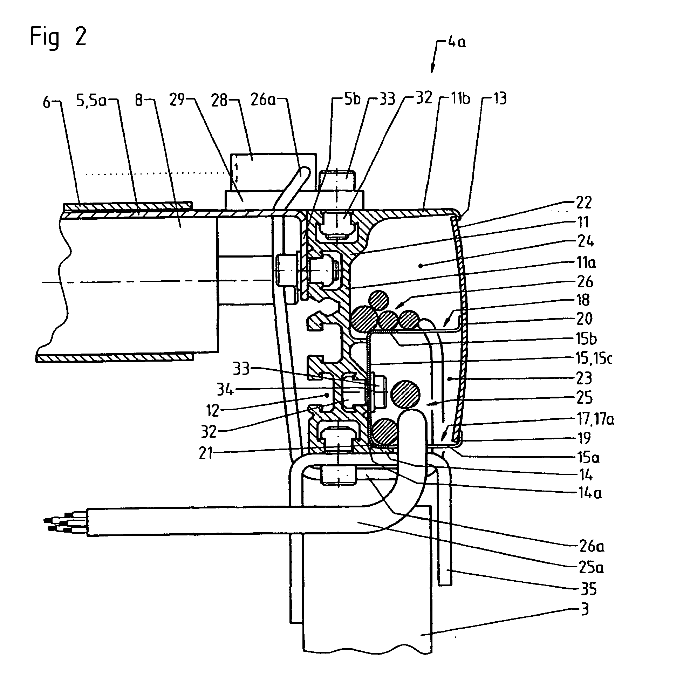

Die erfindungsgemäßen Seitenwangen 4a, 4b des Gurtförderers 1 bestehen aus einem aus Aluminium stranggepressten oder -gezogenen Profilkörper 11, der wie aus Fig. 2 ersichtlich einen im Wesentlichen L-förmigen Grundquerschnitt aufweist mit einem Basisteil 11 a und einem endseitig am Basisteil angeordnetem Schenkel 11 b. Letzterer liegt in der dargestellten Gebrauchslage des Profilkörpers 11 oben und zeigt von der Förderstrecke weg nach außen. Auf der vom Blechkörper 5 abgewandten Innenseite des Profilkörpers 11 ist ein Blechkörper 15 befestigt, der als Blechprofil mit einem C-förmigen Grundquerschnitt umgeformt ist und dessen Steg 15c auf der besagten Innenseite mit in einem Nutensteinkanal 12 des Profilkörpers 11 aufgenommenen Rhombusnutensteinen 32 und Innensechskantschrauben 33 mit zugeordneten Unterlegscheiben 34 festgeklemmt ist.

Der Blechkörper 15 ist ein durch Laserbearbeitung und weiteren Umformungen - wie Biegen - geschaffenes Blechteil, dass ggf. als quasi endloses Blechprofil auf die jeweils erforderlich Länge ablängbar ist. Er ist derart am Profilkörper 11 positioniert, dass sich der L-förmige Querschnitt des Profilkörpers 11 mit dem unteren Schenkel 15a des Blechkörpers 15 zum C-förmigen Grundprofil der Seitenwangen 4a, 4b erweitert. Zur positionsgenaueren Montage des Blechkörpers 15 umfasst der Profilkörper 11 am unteren Ende des Basisteils 11a eine Nase 14, auf die der Blechkörper 15 mit seinem unteren Schenkel 15a aufliegt, wobei mehrere in Längsrichtung des Blechkörpers 15 im Bereich der Biegekante ausgebildete Auskragungen 21 in eine in der Nase 14 eingelassene Längsnut 14a fassen. Die Montage wird zudem vereinfacht durch Befestigungsbohrungen in dem Blechkörper 15, die als teilweise in der Breite erweiterte Langlöcher 16 das Durchstecken der Rhombusnutensteine 32 in den betreffenden Nutensteinkanal 12 ermöglichen.

In dem Bereich zwischen dem Schenkel 11b des Profilkörpers 11 und dem unteren Schenkel 15a des Blechkörpers 15 befindet sich nun der durch eine Abdeckung 22 verschließbare Kabelkanal, welcher durch den oberen Schenkel 15b des Blechkörpers 15 in einen unteren und einen oberen Kabelkanal 23 bzw. 24 aufgeteilt ist. Die beiden Schenkel 15 a,b des Blechkörpers 15 stellen gewissermaßen den jeweiligen Kanalboden dar, der durch das Basisteil 11a einerseits und durch die Abdeckung 22 andererseits seitlich begrenzt ist. Bei abgenommener Abdeckung 22 ist eine seitliche Kanalbegrenzung durch an den Enden der Schenkel 15 a,b vorgesehene Abkantungen 19 und 20 gegeben.

Diese Abkantungen 19, 20 dienen gleichzeitig als Anlageflächen für die Abdeckung 22. Diese kann eine einfache Blechtafel oder Kunststoffplatte sein und liegt mit ihren unteren und oberen Randbereichen hinter der Abkantung 19 des unteren Schenkels 15a bzw. hinter einer am Schenkel 11b des Proftikörpers 11 ausgebildeten Nase 13 an, während sie durch den oberen Schenkel 15b des Blechkörpers 15 in eine nach außen gekrümmte und dadurch ausgesteifte Kontur gezwungen wird.

Zur Zu- und Abführung der in den Kabelkanälen 23, 24 aufgenommenen Kabel und Leitungen sind in den beiden Schenkeln 15 a,b des Blechkörpers 15 in Längsrichtung voneinander beabstandete Aussparungen 17, 18 vorgesehen, wobei die Aussparungen 17 im unteren Schenkel 15a durch Perforationen vordefiniert sind und erst bei Benutzung durch Herausbrechen der Perforation zur geöffneten Aussparung 17a werden. Das Einlegen der Kabel und Leitungen wird durch die sich bis zur Aussenkante der Schenkel 15 a,b erstreckenden und dadurch zur Aussenkante hin geöffneten Aussparungen 17, 18 wesentlich erleichtert, denn die Leitungen müssen so nicht durch die Aussparungen 17, 18 gezogen werden.

Durch die Aufteilung in die zwei Kabelkanäle 23 und 24 wird eine getrennte Verlegung von Versorgungsleitungen 25 und Steuerleitungen 26 ermöglicht. Die Überführung der Kabel und Leitungen von einem Förderer zum nächsten bzw. zu vor- und nachfolgenden Verarbeitungsmaschinen wird durch Durchlässe 36 in den Schutzhauben 10a ...10b ermöglicht, die durch Perforationen vordefiniert sind und bei Bedarf durch Herausbrechen derselben zu öffnen sind. In den Figuren ist die Abführung eines Motoranschlusskabels 25a aus dem unteren Kabelkanal 23 und die Abführung eines Lichtschrankenanschlusskabels 26a aus dem oberen Kabelkanal 24 dargestellt. Auf der Oberseite und an den Außenseiten des Gurtförderers 1 sind keine das äußere Erscheinungsbild in seiner Ästhetik störende Leitungen verlegt. Das Lichtschrankenanschlusskabel 26a gelangt zunächst durch eine Aussparung 18 im oberen Schenkel 15b in den unteren Kabelkanal 23 und wird von dort durch eine direkt darunter befindliche und dafür geöffnete Aussparung 17a aus der Seitenwange 4a nach unten abgeführt. Die Leitung wird auf der Innenseite der linken Seitenwange 4a nach oben geführt und tritt durch eine Öffnung 27 im Steg 5a des Blechkörpers 5 an die Oberseite des Gurtförderers 1, wo es auf kürzestem Wege mit einer Lichtschranke 28 verbunden ist.

Die Lichtschranke 28 ist auf einem Halter 29 befestigt, der in bekannter Weise über Nutensteine am Profilkörper 11 festgelegt ist. Der Lichtschranke 28 zugeordnet ist ein Reflektor 30, der mit einem Halter 31 auf der gegenüberliegenden Seite am Profilkörper 11 der rechten Seitenwange 4b befestigt ist. Die besagte Öffnung 27 ist bereits bei der Fertigung des Blechkörpers 5 eingebracht worden, wobei jeweils eine Reihe von beabstandeten Öffnungen 27 entlang der beiden Außenkanten des Stegs 5a im Blechkörper 5 vorgesehen sind.

In der Fig. 2 erkennt man die verschiedenen T-förmig ausgebildeten Nutensteinkanäle 12 des Profilkörpers 11, in denen mit bekannten Nutensteinen, z.B. den Rhombusnutensteinen 32, verschiedene Anbauteile an den Seitenwangen 4a, 4b befestigbar sind. So wird die Bandkörperbefestigung 35 mit einem Nutensteinkanal auf der Unterseite des Profilkörpers 11 befestigt, während Halterungen 29, 31 für Zusatzeinrichtungen wie besagte Lichtschranke 28 mit Reflektor 30 mit dem betreffenden Nutensteinkanal auf der Oberseite anbringbar sind. Der U-förmige Blechkörper 5 wird mit seinen beiden Schenkeln 5b jeweils über einen oberen Nutensteinkanal auf der zur Förderstrecke zugewandten Außenseite des Profilkörpers 11 der linken und rechten Seitenwange 4a bzw. 4b befestigt. Weitere Nutensteinkanäle 12 auf dieser Außenseite dienen zur Befestigung von nicht näher dargestellten Anbauteilen für die Lagerung der Antriebs-, Umlenk- und ggf. weiteren Spannwalzen und für den Anbau des Getriebemotors und anderer Funktionseinheiten. Schließlich wird mit dem Nutensteinkanal 12 auf der von der Förderstrecke abgewandten Innenseite des Profilkörpers 11 der die beiden Kanalböden darbietende Blechkörper 15 befestigt.

### Bezugszeichenliste

- **1**: Gurtförderer
- **2**: Bandkörper
- **3**: Ständer
- **4a**: linke Seitenwange
- **4b**: rechte Seitenwange
- **5**: Blechkörper
- **5a**: Steg
- **5b**: Schenkel
- **6**: Gurt
- **7**: Antriebswalze
- **8**: Umlenkwalze
- **9**: Getriebemotor
- **10a-d**: Schutzhauben
- **11**: Profilkörper
- **11a**: Basisteil
- **11b**: Schenkel
- **12**: Nutensteinkanal
- **13**: Nase
- **14**: Nase
- **14a**: Längsnut
- **15**: Blechkörper
- **15a**: unterer Schenkel
- **15b**: oberer Schenkel
- **15c**: Steg
- **16**: Langloch
- **17**: Aussparung, perforiert
- **17a**: Aussparung, herausgebrochen
- **18**: Aussparung
- **19**: Abkantung
- **20**: Abkantung
- **21**: Auskragung
- **22**: Abdeckung
- **23**: unterer Kabelkanal
- **24**: oberer Kabelkanal
- **25**: Versorgungsleitungen
- **25a**: Motoranschlusskabel
- **26**: Steuerleitungen
- **26a**: Lichtschrankenanschlusskabel
- **27**: Öffnung
- **28**: Lichtschranke
- **29**: Halter
- **30**: Reflektor
- **31**: Halter
- **32**: Rhombusnutenstein
- **33**: Innensechskantschraube
- **34**: Unterlegscheibe
- **35**: Bandkörperbefestigung
- **36**: Durchlass, perforiert
- **37**: Gelenkfuß

- **F**: Förderrichtung
- **II - II**: Schnittverlauf für Fig. 2

## Patentansprüche

1. Förderer (1) mit profilierten Seitenwangen (4a, 4b), bestehend aus wenigstens einem aus Leichtmetall bestehenden Profilkörper (11) mit longitudinalen, teilweise von der Seitenfläche des Profilkörpers zugänglichen und teilweise als Nutensteinkanal (12) ausgebildeten Hohlräumen und aus einer Abdeckung (22) zum Verschließen eines in der Seitenwange (4a, 4b) ausgebildeten Kabelkanals (23, 24), **dadurch gekennzeichnet, dass** der Profilkörper (11) einen im Wesentlichen L-förmigen Grundquerschnitt aufweist mit einem in Gebrauchslage nach außen gewandten oberen Schenkel (11b), dass am Basisteil (11a) des Profilkörpers ein Blechkörper (15) zur Ausbildung eines unteren Schenkels (15a) eines C-förmigen Gesamtgrundquerschnitts der Seitenwange (4a, 4b) befestigt ist, welcher in Längsrichtung voneinander beabstandete Aussparungen (17, 17a) aufweist, und dass die Abdeckung (22) an den beiden Schenkeln (11b, 15a) abnehmbar angeordnet ist.

2. Förderer mit profilierten Seitenwangen nach Anspruch 1, **dadurch gekennzeichnet, dass** die Aussparungen (17) durch Perforationen vordefiniert und somit bis zum Herausbrechen derselben verschlossen sind.

3. Förderer mit profilierten Seitenwangen nach Anspruch 1 oder 2, **dadurch gekennzeichnet, dass** der Blechkörper (15) als Blechprofil mit einem im Wesentlichen C-förmigen Grundquerschnitt umgeformt ist, dessen Steg (15c) an der Innenseite des Profilkörpers (11) befestigt ist und dessen oberer Schenkel (15b) den Kabelkanal (23, 24) in zwei voneinander getrennte Bereiche aufteilt.

4. Förderer mit profilierten Seitenwangen nach Anspruch 3, **dadurch gekennzeichnet, dass** der obere Schenkel (15b) des Blechkörpers mit in Längsrichtung voneinander beabstandeten Aussparungen (18) versehen ist, welche ungefähr über den Aussparungen des unteren Schenkels (17) angeordnet sind.

5. Förderer mit profilierten Seitenwangen nach einem der Ansprüche 1 bis 4, **dadurch gekennzeichnet, dass** sich die Aussparungen (17, 18) bis zur Aussenkante der Schenkel (15a, 15b) erstrecken, sodass Leitungen (26, 26) bei geöffneter Abdeckung (22) von außen einlegbar sind, ohne diese durch die Aussparungen (17, 18) ziehen zu müssen.

6. Förderer mit profilierten Seitenwangen nach einem der Ansprüche 1 bis 5, **dadurch gekennzeichnet, dass** der Blechkörper (15) an den Enden der Schenkel (15a, 15b) mit Abkantungen (19, 20) versehen ist, zur Ausbildung einer bei abgenommener Abdeckung (22) wirksamen Kanalbegrenzung und zur Darbietung von Anlageflächen für die Abdeckung (22).

7. Förderer mit profilierten Seitenwangen nach Anspruch 6, **dadurch gekennzeichnet, dass** die Abdeckung (22) mit ihrem unteren Randbereich hinter der Abkantung (19) des unteren Schenkels (15a) des Blechkörpers und mit ihrem oberen Randbereich hinter einer am Schenkel (11b) des Profilkörpers ausgebildeten Nase (13) anliegt oder in einer am Schenkel (11b) angeordneten Nut eingesetzt ist.

8. Förderer mit profilierten Seitenwangen nach Anspruch 3 und 7, **dadurch gekennzeichnet, dass** die Abdeckung (22) durch den oberen Schenkel (15b) des Blechkörpers in eine nach außen gekrümmte Kontur gezwungen wird.

9. Förderer mit profilierten Seitenwangen nach einem der Ansprüche 1 bis 8, **dadurch gekennzeichnet, dass** der Blechkörper (15) zur Befestigung am Profilkörper (11) mit in Längsrichtung voneinander beabstandeten Langlöchern (16) versehen ist, welche zum Durchstecken von Nutensteinen (32) teilweise erweitert sind.

10. Förderer mit profilierten Seitenwangen nach einem der Ansprüche 1 bis 9, **dadurch gekennzeichnet, dass** zur Positionierung des Blechkörpers (15) der Profilkörper (11) am unteren Ende des Basisteils (11a) mit einer Nase (14) und einer an der Nase ausgebildeten Längsnut (14a) versehen ist.

11. Förderer mit profilierten Seitenwangen nach einem der Ansprüche 1 bis 10, **dadurch gekennzeichnet, dass** die Seitenwangen (4a, 4b) an Schenkeln (5b) eines U-förmig umgeformten und eine Lauffläche für einen Gurt (6) darbietenden Blechkörpers (5) befestigt sind, welcher Öffnungen (27) zum Durchführen von Leitungen (25, 26) aufweist, die im Steg (5a) des Blechkörpers entlang der Schenkel (5b) angeordnet sind.

12. Förderer mit profilierten Seitenwangen nach einem der Ansprüche 1 bis 11, **dadurch gekennzeichnet, dass** der Förderer ein Gurtförderer (1) (Förderband, Transportband), ein Riemenförderer, ein Kettenförderer, ein Rollenförderer (Rollenbahn) oder ein Scharnierbandförderer ist.

## Claims

1. A conveyor (1) with profiled cheeks (4a, 4b) consisting of a profiled member (11) of light metal with longitudinal hollow spaces that are partly accessible from the lateral surface of the profiled member and partly realized in the form of a sliding block channel (12), and of a cover (22) for closing a cable channel (23, 24) arranged in the cheek (4a, 4b), **characterized in that** the profiled member (11) has an essentially L-shaped base cross section with an upper limb (11b) that points outward in the operative position, **in that** a sheet metal member (15) is mounted on the base part (11a) of the profiled member in order to form the lower limb (15a) of the C-shaped base cross section of the cheek (4a, 4b), wherein said sheet metal member contains openings (17, 17a) that are spaced apart from one another in the longitudinal direction, and **in that** the cover (22) is removably arranged on the two limbs (11b, 15a).

2. The conveyor with profiled cheeks according to Claim 1, **characterized in that** the openings (17) are predefined in the form of perforations and consequently remain closed until the perforations are punched out.

3. The conveyor with profiled cheeks according to Claim 1 or 2, **characterized in that** the sheet metal member (15) is realized in the form of a sheet metal profile with an essentially C-shaped base cross section, the web (15c) of which is mounted on the inner side of the profiled member (11) and the upper limb (15b) of which divides the cable channel (23, 24) into two separate regions.

4. The conveyor with profiled cheeks according to Claim 3, **characterized in that** the upper limb (15b) of the sheet metal member is provided with openings (18) that are spaced apart from one another in the longitudinal direction and arranged approximately above the openings in the lower limb (17).

5. The conveyor with profiled cheeks according to one of Claims 1-4, **characterized in that** the openings (17, 18) extend as far as the outer edge of the limbs (15a, 15b) such that lines (26, 26) can be installed from outside while the cover (22) is open, namely without having to pull said lines through the openings (17, 18).

6. The conveyor with profiled cheeks according to one of Claims 1-5, **characterized in that** the sheet metal member (15) is provided with bevels (19, 20) on the ends of the limbs (15a, 15b), wherein said bevels serve for forming an effective channel limitation when the cover (22) is removed and for providing contact surfaces for the cover (22).

7. The conveyor with profiled cheeks according to Claim 6, **characterized in that** the cover (22) lies behind the bevel (19) of the lower limb (15a) of the sheet metal member with its lower edge region and behind a lip (13) arranged on the limb (11b) of the profiled member or in a groove arranged in the limb (11b) with its upper edge region.

8. The conveyor with profiled cheeks according to Claims 3 and 7, **characterized in that** the upper limb (15b) of the sheet metal member causes the cover (22) to assume an outwardly curved contour.

9. The conveyor with profiled cheeks according to one of Claims 1-8, **characterized in that** the sheet metal member (15) is provided with oblong holes (16) that are spaced apart from one another in the longitudinal direction in order to mount said sheet metal member on the profiled member (11), wherein these oblong holes are partly widened in order to insert sliding blocks (32).

10. The conveyor with profiled cheeks according to one of Claims 1-9, **characterized in that** the profiled member (11) is provided with a lip (14) and a longitudinal groove (14a) arranged in said lip on the lower end of the base part (11a) in order to position the sheet metal member (15).

11. The conveyor with profiled cheeks according to one of Claims 1-10, **characterized in that** the cheeks (4a, 4b) are mounted on limbs (5b) of a U-shaped sheet metal member (5) that forms a supporting surface for a belt (6), wherein said sheet metal member contains openings (27) that are arranged in the web (5a) of the sheet metal member along the limbs (5b) and serve for leading through lines (25, 26).

12. The conveyor with profiled cheeks according to one of Claims 1-11, **characterized in that** the conveyor consists of a belt conveyor (1) (conveyor belt, transport belt), a band conveyor, a chain conveyor, a roller conveyor (gravity roller conveyor) or a slat-band chain conveyor.

## Revendications

1. Transporteur (1) avec des joues latérales (4a, 4b) profilées constituées d'au moins un corps en profilé (11) en métal léger avec des cavités longitudinales, accessibles partiellement par la face latérale du corps en profilé et conçues partiellement comme canal de coulisseau (12) et d'un revêtement (22) pour la fermeture d'un caniveau de câbles (23, 24) réalisé dans la paroi latérale (4a, 4b), **caractérisé en ce que** le corps en profilé (11) présente une section de base sensiblement en L avec une branche (11b) supérieure tournée vers l'extérieur dans la position d'utilisation, **en ce que** sur la partie de base (11a) du corps en profilé est fixé un corps en tôle (15) pour la réalisation d'une branche (15a) inférieure d'une section de base globale en C de la joue latérale (4a, 4b), qui présente des évidements (17, 17a) espacés les uns des autres dans le sens longitudinal et **en ce que** le revêtement (22) est disposé de façon amovible sur les deux branches (11b, 15a).

2. Transporteur avec des joues latérales profilées selon la revendication 1, **caractérisé en ce que** les évidements (17) sont prédéfinis par des perforations et sont fermés ainsi jusqu'au percement de ces perforations par l'extérieur.

3. Transporteur avec des joues latérales profilées selon la revendication 1 ou 2, **caractérisé en ce que** le corps en tôle (15) est formé comme profilé en tôle avec une section de base sensiblement en C, dont la barrette (15c) est fixée sur le côté intérieur du corps en profilé (11) et dont la branche (15c) supérieure subdivise le caniveau de câbles (23, 24) en deux zones séparées l'une de l'autre.

4. Transporteur avec des joues latérales profilées selon la revendication 3, **caractérisé en ce que** la branche (15b) supérieure du corps en tôle est pourvue d'évidements (18) espacés les uns des autres dans le sens longitudinal, lesquels sont disposés à peu près au-dessus des évidements (17) de la branche inférieure.

5. Transporteur avec des joues latérales profilées selon l'une quelconque des revendications 1 à 4, **caractérisé en ce que** les évidements (17, 18) s'étendent jusqu'au bord extérieur des branches (15a, 15b), de sorte que des lignes (26, 26) peuvent être introduites par l'extérieur lorsque le revêtement (22) est ouvert, sans qu'on soit obligé de les tirer par les évidements (17, 18).

6. Transporteur avec des joues latérales profilées selon l'une quelconque des revendications 1 à 5, **caractérisé en ce que** le corps en tôle (15) est doté sur les extrémités des branches (15a, 15b) de chanfreins (19, 20) pour la réalisation d'une délimitation de canal efficace lorsque le revêtement (22) est enlevé et pour former des surfaces d'appui pour le revêtement (22).

7. Transporteur avec des joues latérales profilées selon la revendication 6, **caractérisé en ce que** le revêtement (22) s'appuie par sa zone périphérique inférieure derrière le chanfrein (19) de la branche (15a) inférieure du corps en tôle et par sa zone périphérique supérieure derrière un nez (13) réalisé sur la branche (11b) du corps en profilé ou est inséré dans une rainure disposée sur la branche (11b).

8. Transporteur avec des joues latérales profilées selon les revendications 3 et 7, **caractérisé en ce que** le revêtement (22) est forcé par la branche (15b) supérieure du corps en tôle de suivre un contour incurvé vers l'extérieur.

9. Transporteur avec des joues latérales profilées selon l'une quelconque des revendications 1 à 8, **caractérisé en ce que** le corps en tôle (15) est doté pour la fixation sur le corps en profilé (11) de trous oblongs (16) espacés les uns des autres dans le sens longitudinal, lesquels sont partiellement élargis pour l'emboîtement de coulisseaux (32).

10. Transporteur avec des joues latérales profilées selon l'une quelconque des revendications 1 à 9, **caractérisé en ce que**, pour le positionnement du corps en tôle (15), le corps en profilé (11) est doté sur l'extrémité inférieure de la partie de base (11a) d'un nez (14) et d'une rainure longitudinale (14a) formée sur le nez.

11. Transporteur avec des joues latérales profilées selon l'une quelconque des revendications 1 à 10, **caractérisé en ce que** les joues latérales (4a, 4b) sont fixées sur des branches (5b) d'un corps en tôle façonné en U et présentant une surface de roulement pour une sangle (6), lequel corps présente des ouvertures (27) pour le passage de lignes (25, 26) qui sont disposées dans la barrette (5a) du corps en tôle le long des branches (5b).

12. Transporteur avec des joues latérales profilées selon l'une quelconque des revendications 1 à 11, **caractérisé en ce que** le transporteur est un transporteur à sangle (1) (bande transporteuse, tapis roulant), un transporteur à courroie, un transporteur à chaîne, un transporteur à rouleaux (transporteur à galets) ou un transporteur à bande à charnière.
